# EUROPEAN PATENT SPECIFICATION

(11) **EP 3 333 373 B1**
(45) Date of publication and mention of the grant of the patent: **23.11.2022**
(21) Application number: 17206222.6
(22) Date of filing: 08.12.2017
(51) Int. Cl.: F01D 13/00, B64D 35/04, B64D 35/08, F02K 3/062, F02C 3/107, B64D 27/10

(54) **CONCENTRIC SHAFTS DRIVING ADJACENT FANS FOR AIRCRAFT PROPULSION**
BENACHBARTE GEBLÄSE ANTREIBENDE KONZENTRISCHE WELLEN FÜR FLUGZEUGANTRIEB
ARBRES CONCENTRIQUES ENTRAINANT DES SOUFFLANTES ADJACENTES POUR LA PROPULSION D'UN AÉRONEF

(30) Priority: 08.12.2016 US 201615373101
(43) Date of publication of application: 13.06.2018
(73) Proprietor: Raytheon Technologies Corporation, Farmington, CT 06032 (US)
(72) Inventor: CHANDLER, Jesse M., South Windsor, CT Connecticut 06074 (US); SUCIU, Gabriel L., Glastonbury, CT Connecticut 06033 (US)
(74) Representative: Dehns

(56) References cited:
- DE-A1- 19 840 711
- GB-A- 2 231 623
- US-A- 2 470 155
- US-A- 3 054 577
- US-B1- 6 279 852

## Description

### BACKGROUND OF THE INVENTION

This application relates to the provision of a twin fan propulsion system for aircraft application.

Gas turbine engines are known for providing propulsion to aircraft. Typically, a fan delivers air into a bypass duct as propulsion air. The fan also delivers air into a compressor where it is compressed and then delivered into a combustor. In the combustor, the compressed air is mixed with fuel and ignited. Products of this combustion pass downstream over a turbine section driving turbine rotors to rotate. The turbine rotors, in turn, drive the compressor and fan.

Recently, advanced aircraft applications have been proposed wherein fans are mounted separately from a gas generator core engine which provides drive to the fans. The fans may be made relatively large and provide a good deal of additional propulsion, as they are not the source of air being delivered into the compressor.

However, drive systems for such remotely mounted fans have not been fully developed.

US6279852B1 discloses a prior art propulsion system according to the preamble of claim 1.

DE 19840711 A1, US 3054577 A and US 2470155 A disclose prior art arrangements.

### SUMMARY OF THE INVENTION

According to the present invention, a propulsion system for an aircraft is provided as set forth in claim 1.

In another embodiment according to any of the previous embodiments, the first intermediate shafts and the fan drive shafts extend parallel to the axis of rotation of the at least two fans.

In another embodiment according to any of the previous embodiments, the intermediate fan drive shaft extends perpendicularly to the axis of rotation of the at least two fans.

In another embodiment according to any of the previous embodiments, a central axis of each the turboshaft gas turbine engine is parallel to the axis of rotation of the at least two fans.

In another embodiment according to any of the previous embodiments, a central axis of each the turboshaft gas turbine engines is non-parallel to the axis of rotation of the at least two fans.

In another embodiment according to any of the previous embodiments, bevel gears drive the first intermediate shafts from the turboshaft gas turbine engines.

These and other features may be best understood from the following drawings and specification.

### BRIEF DESCRIPTION OF THE DRAWINGS

Figure 1 schematically shows an aircraft propulsion system.
Figure 2 shows a feature.
Figure 3 shows another feature.
Figure 4 shows another feature.

### DETAILED DESCRIPTION

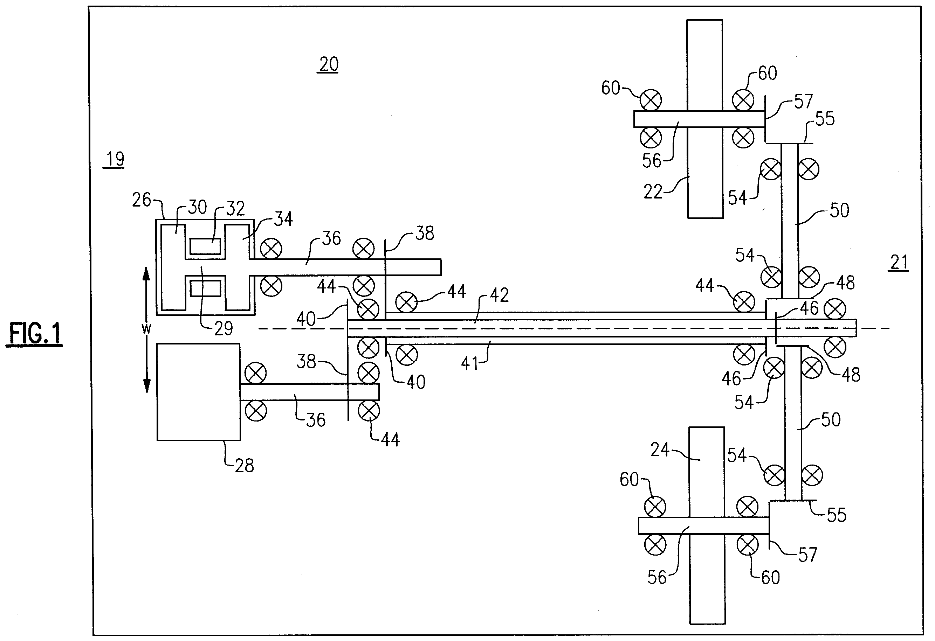

An aircraft 20 is shown having a forward location 19 and a rearward location 21. All of the structure illustrated in Figure 1 may be generally found in the tail portion of the aircraft, however, numbers 19 and 21 give perspective for the relative direction. In addition, a width W is illustrated across the aircraft 20.

Two large fans 22 and 24 are shown and provide propulsion for the aircraft 20. The fan 22 is driven by a turboshaft engine 26 and the fan 24 is powered by a turboshaft engine 28. Each engine 26 and 28 includes a compressor section 30, a combustor 32, and a turbine section 34. The turbine section 34 drives a shaft 29 to, in turn, drive the compressor 30. The turbine section 34 also drives a shaft 36 which drives a gear 38. Gears 38 engage gears 40 each driving separate shafts 41 and 42, which are mounted in bearings 44.

Shafts 41 and 42 drive a gear 46 which engages a gear 48. Each gear 48 drives shafts 50, which are mounted in bearings 54. The shafts 50, in turn, drive gears 55. Gears 55 drive shafts 56 through gears 57. Shafts 56, in turn, drive fan rotors in both fans 22 and 24. In addition, shafts 56 are mount in bearings 60.

As can be appreciated, the shafts 41 and 42 extends from the engines 26 and 28 generally along an axial direction between locations 19 and 21. As shown in this Figure, the shafts 36 and 42 extend generally parallel to a forward direction along the aircraft or parallel to an axis of rotation of fans 22/24. The shafts 50 are perpendicular to the shafts 42 and the shafts 56 are parallel to the shafts 42. The fan rotor rotates on an axis of rotation of shafts 56.

One could say the system includes at least two first intermediate drive shafts extend over a distance that is greater in an axial dimension, defined between the turboshaft 41/42, gas turbine engine 26/28, and the fan 22/24, than it is in a width dimension defined between the at least two fans 22/24.

More generally, it could be said the shafts 36, 41 and 42 extend along the axial dimension for a greater distance than they do along the width dimension. The same is true for the shafts 56. On the other hand, the shafts 50 could be said to extend along a greater distance in the width dimension than they do in the axial dimension.

As can be appreciated from Figure 1, the shafts 36 extend from the turbine and in a rearward direction.

As can be appreciated from Figure 1, shaft 41 is hollow and shaft 42 extends through the hollow shaft 41. The shafts are mounted concentrically, which requires less width for packaging purposes. This arrangement is particularly advantageous when tight packing constraints exist.

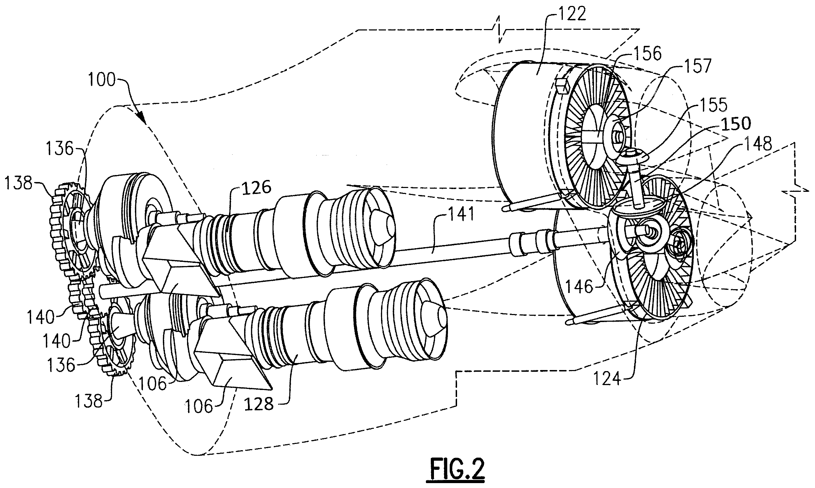

Figure 2 shows an embodiment 100 which is generally similar to the embodiment of Figure 1, however the drive shafts 136 can now be seen to extend from the forward end of the engine, or beyond the compressor section. Scoop air inlets 106 are also shown, which would preferably also be true for the engines 26 and 28 of Figure 1. Air is provided to the compressor through the inlet 106. The other features are generally the same as in the Figure 1 embodiment, however, their numerals are increased by 100.

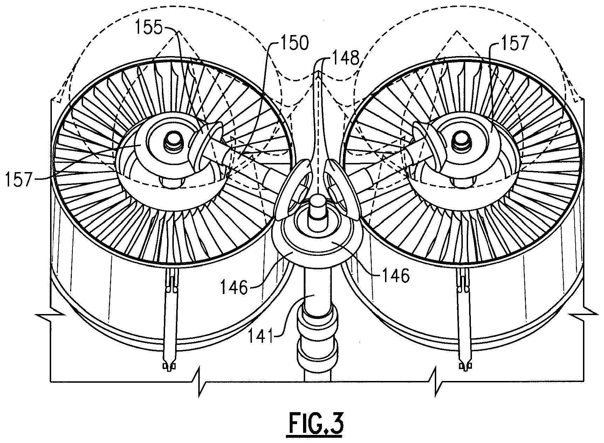

Figure 3 shows further details. As can be seen, the gear 146 driven by the inner intermediate shaft 142 extends slightly rearwardly of the gear 146 driven by the outer shaft 141. The gears engage gears 148 to in turn drive their respective intermediate fan drive shaft 150. Gears 155 driven by the intermediate fan drive shaft in turn drive the gears 157.

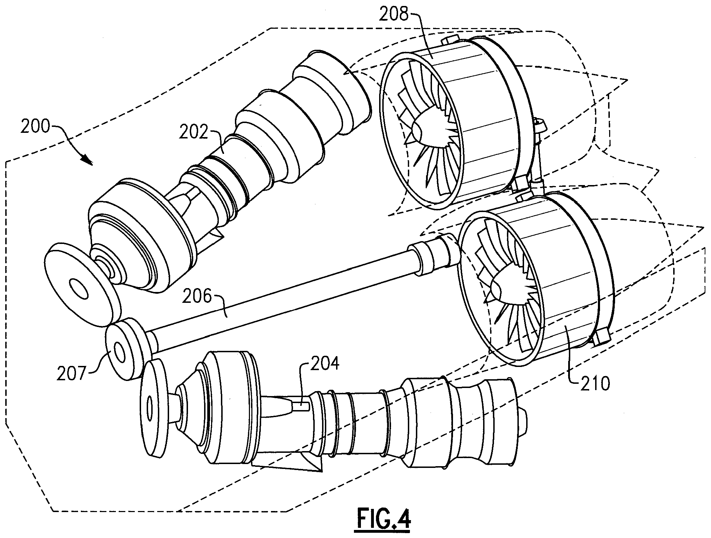

Figure 4 shows an embodiment 200, wherein the engines 202 and 204 are at an angle relative to the fan rotational axis. The shafts 206 and 207 are still parallel to an axis of the fans, also now at an angle and drive the fans 208 and 210 through intermediate shafts.

By angling the engines, better packaging may be achieved for a particular aircraft application. Bevel gears may be utilized between engines 202 and 204, and shafts 206 and 207.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A propulsion system for an aircraft comprising:
at least two fans (22, 24; 122, 124; 208, 210), each fan (22...210) having a fan drive shaft (56; 156);
at least two turboshaft gas turbine engines (26, 28; 126, 128; 202, 204) for driving said at least two fans (22...210), each turboshaft engine (26...204) driving a respective output shaft (36; 136) which drives a respective gear (38; 138) to, in turn, drive a respective gear (40; 140) on a respective first intermediate shaft (41, 42; 141; 206; 207) extending from said turboshaft gas turbine engine (26...204) in a rearward direction toward a respective intermediate fan drive shaft (50; 150), each intermediate fan drive shaft (50; 150) driving a respective one of said fan drive shafts (56; 156), each first intermediate shaft (41...207) extending parallel to an axis of rotation of the fans (22...210), said first intermediate shafts (41...207) being concentric, wherein said first intermediate shafts (41...207) each extend to a respective output gear (46; 146) which engages a respective gear (48; 148) on said intermediate fan drive shafts (50; 150), with said output gear (46; 146) on one of said first intermediate drive shafts (41...207) extending to a position spaced rearwardly relative to said output gear (46; 146) on a second of said first intermediate shafts (41... 207);
wherein:
each first intermediate shaft (41...207) extends over a distance that is greater in an axial dimension defined between said turboshaft gas turbine engine (26...204) and a respective fan (22...210) than in a width dimension defined between said at least two fans (22...210); and
each intermediate fan drive shaft (50; 150) extends for a greater distance in the width dimension than in said axial direction and each fan drive shaft (56; 156) extends for a greater distance in said axial direction than in said width direction;
**characterised in that**:
each output shaft (36; 136) extends from a forward end of the respective turboshaft engine (26...204).

2. The propulsion system as set forth in claim 1, wherein said first intermediate shafts (41...207) and said fan drive shafts (56; 156) extend parallel to said axis of rotation of said at least two fans (22...210).

3. The propulsion system as set forth in claim 1 or 2, wherein said intermediate fan drive shaft (50; 150) extends perpendicularly to said axis of rotation of said at least two fans (22...210).

4. The propulsion system as set forth in any preceding claim, wherein a central axis of each said turboshaft gas turbine engines (26, 28; 126, 128) is parallel to said axis of rotation of said at least two fans (22, 24; 122, 124).

5. The propulsion system as set forth in any of claims 1 to 3, wherein a central axis of each said turboshaft gas turbine engines (202, 204) is non-parallel to said axis of rotation of said at least two fans (208, 210).

6. The propulsion system as set forth in claim 5, wherein bevel gears drive said first intermediate shafts (206, 207) from said turboshaft gas turbine engines (202, 204).

## Patentansprüche

1. Antriebssystem für ein Luftfahrzeug, das Folgendes umfasst:
mindestens zwei Lüfter (22, 24; 122, 124; 208, 210), wobei jeder Lüfter (22...210) eine Lüfterantriebswelle (56; 156) aufweist; mindestens zwei Turbowellen-Gasturbinentriebwerke (26, 28; 126, 128; 202, 204) zum Antreiben der mindestens zwei Lüfter (22...210), wobei jedes Turbowellentriebwerk (26...204) eine jeweilige Ausgangswelle (36; 136) antreibt, die ein jeweiliges Zahnrad (38; 138) antreibt, um wiederum ein jeweiliges Zahnrad (40; 140) auf einer jeweiligen ersten Zwischenwelle (41, 42; 141; 206; 207) anzutreiben, die sich von dem Turbowellen-Gasturbinentriebwerk (26...204) in einer Rückwärtsrichtung zu einer jeweiligen Lüfterzwischenantriebswelle (50; 150) erstreckt, wobei jede Lüfterzwischenantriebswelle (50; 150) eine jeweilige der Lüfterantriebswellen (56; 156) antreibt, wobei sich jede erste Zwischenwelle (41...207) parallel zu einer Rotationsachse der Lüfter (22...210) erstreckt, wobei die ersten Zwischenwellen (41...207) konzentrisch sind, wobei sich die ersten Zwischenwellen (41...207) jeweils zu einem jeweiligen Ausgangszahnrad (46; 146) erstrecken, das in ein jeweiliges Zahnrad (48; 148) auf den Lüfterzwischenantriebswellen (50; 150) eingreift, wobei sich das Ausgangszahnrad (46; 146) auf einer der ersten Zwischenantriebswellen (41...207), die sich zu einer Position erstrecken, die relativ zu dem Ausgangszahnrad (46; 146) nach hinten beabstandet ist, auf einer zweiten der ersten Zwischenwellen (41...207) erstreckt;
wobei:
sich jede erste Zwischenwelle (41...207) über eine Distanz erstreckt, die in einem axialen Maß, das zwischen dem Turbowellen-Gasturbinentriebwerk (26...204) und einem jeweiligen Lüfter (22...210) definiert ist, größer ist als in einem Breitenmaß, das zwischen den mindestens zwei Lüftern (22...210) definiert ist; und
sich jede Lüfterzwischenantriebswelle (50; 150) über eine größere Distanz in dem Breitenmaß als in der axialen Richtung erstreckt, und sich jede Lüfterantriebswelle (56; 156) in der axialen Richtung über eine größere Distanz als in der Breitenrichtung erstreckt;
**dadurch gekennzeichnet, dass**:
sich jede Ausgangswelle (36; 136) von einem vorderen Ende des jeweiligen Turbowellentriebwerks (26...204) erstreckt.

2. Antriebssystem nach Anspruch 1, wobei sich die ersten Zwischenwellen (41...207) und die Lüfterantriebswellen (56; 156) parallel zu der Rotationsachse der mindestens zwei Lüfter (22...210) erstrecken.

3. Antriebssystem nach Anspruch 1 oder 2, wobei sich die Lüfterzwischenantriebswelle (50; 150) senkrecht zu der Rotationsachse der mindestens zwei Lüfter (22...210) erstreckt.

4. Antriebssystem nach einem vorstehenden Anspruch, wobei eine Mittelachse jedes der Turbowellen-Gasturbinentriebwerke (26, 28; 126, 128) zu der Rotationsachse der mindestens zwei Lüfter (22, 24; 122, 124) parallel ist.

5. Antriebssystem nach einem der Ansprüche 1 bis 3, wobei eine Mittelachse jedes der Turbowellen-Gasturbinentriebwerke (202, 204) zu der Rotationsachse der mindestens zwei Lüfter (208, 210) nicht parallel ist.

6. Antriebssystem nach Anspruch 5, wobei Kegelräder die ersten Zwischenwellen (206, 207) von den Turbowellen-Gasturbinentriebwerken (202, 204) antreiben.

## Revendications

1. Système de propulsion pour un aéronef comprenant :
au moins deux soufflantes (22, 24 ; 122, 124 ; 208, 210), chaque soufflante (22...210) ayant un arbre d'entraînement de soufflante (56 ; 156) ;
au moins deux turbomoteurs à turbine à gaz (26, 28 ; 126, 128 ; 202, 204) pour entraîner lesdites au moins deux soufflantes (22...210), chaque turbomoteur (26...204) entraînant un arbre de sortie (36 ; 136) respectif qui entraîne un engrenage (38 ; 138) respectif pour, à son tour, entraîner un engrenage (40 ; 140) respectif sur un premier arbre intermédiaire (41, 42 ; 141 ; 206 ; 207) respectif s'étendant depuis ledit turbomoteur à turbine à gaz (26...204) dans une direction vers l'arrière vers un arbre d'entraînement de soufflante intermédiaire (50 ; 150) respectif, chaque arbre d'entraînement de soufflante intermédiaire (50 ; 150) entraînant un arbre respectif desdits arbres d'entraînement de soufflante (56 ; 156), chaque premier arbre intermédiaire (41...207) s'étendant parallèlement à un axe de rotation des soufflantes (22...210), lesdits premiers arbres intermédiaires (41...207) étant concentriques, dans lequel lesdits premiers arbres intermédiaires (41...207) s'étendent chacun vers un engrenage de sortie (46 ; 146) respectif qui vient en prise avec un engrenage (48 ; 148) respectif sur lesdits arbres d'entraînement de soufflante intermédiaires (50 ; 150), avec ledit engrenage de sortie (46 ; 146) sur l'un desdits premiers arbres d'entraînement intermédiaires (41...207) s'étendant jusqu'à une position espacée vers l'arrière par rapport audit engrenage de sortie (46 ; 146) sur un second desdits premiers arbres intermédiaires (41...207) ;
dans lequel :
chaque premier arbre intermédiaire (41...207) s'étend sur une distance qui est plus grande dans une dimension axiale définie entre ledit turbomoteur à turbine à gaz (26...204) et une soufflante (22...210) respective que dans une dimension en largeur définie entre lesdites au moins deux soufflantes (22...210) ; et
chaque arbre d'entraînement de soufflante intermédiaire (50 ; 150) s'étend sur une distance plus grande dans la dimension de largeur que dans ladite direction axiale et chaque arbre d'entraînement de soufflante (56 ; 156) s'étend sur une distance plus grande dans ladite direction axiale que dans ladite direction de largeur ;
**caractérisé en ce que** :
chaque arbre de sortie (36 ; 136) s'étend depuis une extrémité avant du turbomoteur (26...204) respectif.

2. Système de propulsion selon la revendication 1, dans lequel lesdits premiers arbres intermédiaires (41...207) et lesdits arbres d'entraînement de soufflante (56 ; 156) s'étendent parallèlement audit axe de rotation desdites au moins deux soufflantes (22...210).

3. Système de propulsion selon la revendication 1 ou 2, dans lequel ledit arbre d'entraînement de soufflante intermédiaire (50 ; 150) s'étend perpendiculairement audit axe de rotation desdites au moins deux soufflantes (22...210).

4. Système de propulsion selon une quelconque revendication précédente, dans lequel un axe central de chacun desdits turbomoteurs à turbine à gaz (26, 28 ; 126, 128) est parallèle audit axe de rotation desdites au moins deux soufflantes (22, 24 ; 122, 124).

5. Système de propulsion selon l'une quelconque des revendications 1 à 3, dans lequel un axe central de chacun desdits turbomoteurs à turbine à gaz (202, 204) est non parallèle audit axe de rotation desdites au moins deux soufflantes (208, 210) .

6. Système de propulsion selon la revendication 5, dans lequel des engrenages coniques entraînent lesdits premiers arbres intermédiaires (206, 207) desdits turbomoteurs à turbine à gaz (202, 204).
